# EUROPÄISCHE PATENTANMELDUNG

(11) **EP 0 821 874 A1**
(43) Veröffentlichungstag der Anmeldung: **04.02.1998**
(21) Anmeldenummer: 97112705.5
(22) Anmeldetag: 24.07.1997
(51) Int. Cl.: A01K 97/12

(54) **Bissanzeiger**

(30) Priorität: 02.08.1996 DE 29613362 U; 09.05.1997 DE 29708258 U
(71) Anmelder: Fuhrmann, Dieter, 50968 Köln (DE)
(72) Erfinder: Fuhrmann, Dieter, 50968 Köln (DE)
(74) Vertreter: Freischem, Werner, Dipl.-Ing.

(57) **Zusammenfassung**

Bißanzeiger für Angelruten, mit einem Gehäuse aus transparentem Kunststoff, einer im Gehäuse (1) untergebrachten Leuchteinrichtung, die sich zusammensetzt aus mindestens einer Batterie (7), mindestens einer Leuchtdiode (5) und einem von einer beweglichen Masse (4) betätigten Schalter, wobei die bewegliche Masse (4) in einem Hohlraum (3) des Gehäuses (1) gehalten ist.

Ein kleines, leichtes Gerät, das am Ende einer Angelrute befestigt werden kann und das störungsfrei arbeitet und leicht auf unterschiedliche Empfindlichkeiten eingestellt werden kann, weist ein Gehäuse (1) und einen Hohlraum (3) auf, dessen Querschnitt größer ist als der größte Querschnitt der vorzugsweise kugelförmigen Masse (4) und der zum Inneren des Gehäuses von einer hochempfindlichen Schaltscheibe (5) bzw. Piezoscheibe abgeschlossen ist, die bei Aufprall der Masse (4) über die Elektronik (7) ein Lichtsignal auslöst. Das Lichtsignal kann darin bestehen, daß die Leuchtdiode aufleuchtet oder die leuchtende Leuchtdiode auf ein pulsierendes Leuchten umschaltet. Am Gehäuse (1) ist in der Flucht der Leuchtdiode (5) ein aus transparentem, insbesondere lichtleitendem Kunststoff bestehender stabförmiger Zeiger (10) angeordnet.

## Beschreibung

Die Erfindung bezieht sich auf einen Bißanzeiger für Angelruten, mit einem Gehäuse aus transparentem Kunststoff, einer im Gehäuse untergebrachten elektronischen Leuchteinrichtung, die sich zusammensetzt aus einer Batterie, mindestens einer Leuchtdiode und einem von einer beweglichen Masse betätigten Schalter, wobei die bewegliche Masse in einem Hohlraum des Gehäuses gehalten ist.

Bißanzeiger dieser Art, die am oberen Endbereich einer Angelrute zu befestigen sind, sind bekannt aus dem deutschen Gebrauchsmuster 296 07 390 des Anmelders. Bei diesem Gerät besteht die bewegliche Masse aus einem Magneten, der an einer Schraubenfeder oder einem anderen elastischen Glied befestigt ist und der mit einem Reedkontakt zusammenwirkt, um ein Lichtsignal auszulösen, wenn durch ruckartiges Ziehen an der Angelschnur die Angelrutenspitze ruckartig bewegt wird.

Bei dem bekannten Gerät sind die Einzelteile relativ teuer und ihr Zusammenbau schwierig und zeitaufwendig, wenn man ein zuverlässiges, störungsfreies Funktionieren erreichen will.

Der Erfindung liegt die Aufgabe zugrunde, ein kleines, leichtes und zuverlässiges, störungsfrei arbeitendes Bißanzeigegerät zu schaffen, das ohne größeren Aufwand auf unterschiedliche Empfindlichkeiten eingestellt werden kann.

Diese Aufgabe wird erfindungsgemäß dadurch gelöst, daß der Hohlraum im Querschnitt größer ist als der größte Querschnitt der vorzugsweise kugelförmigen Masse und zum Inneren des Gehäuses von einer hochempfindlichen Schaltscheibe oder Piezoscheibe abgeschlossen ist, die bei Aufprall der Masse über die Elektronik ein Lichtsignal auslöst.

Das Lichtsignal kann darin bestehen, daß die Leuchtdiode aufleuchtet oder daß die schon leuchtende Leuchtdiode auf ein pulsierendes Leuchten umgeschaltet wird.

Am Gehäuse der Bißanzeige ist in der Flucht der Lichtquelle ein aus lichtleitendem Kunststoff bestehender, stabförmiger Zeiger angeordnet. Im Boden des Gehäuses ist ein länglicher Kanal zur Aufnahme der Leuchtdiode angeordnet, und koaxial zu diesem Kanal ist der Zeiger angeordnet.

Der Hohlraum, der die kugelförmige, das Signal einschaltende Masse aufnimmt, ist größer als die Kugel. Dadurch kann die Kugel sich frei bewegen. Im Ruhezustand befindet sich die Kugel auf der Piezoscheibe. Erst bei ruckartiger Bewegung der Angelrute bewegt sich die Kugel von der Piezoscheibe weg und schlägt anschließend auf die Piezoscheibe auf. Durch den Aufprall löst die Piezoscheibe einen elektrischen Stromimpuls aus. Die daran angeschlossene SMD-Elektronik schließt einen elektrischen Stromkreislauf, der das Lichtsignal auslöst. Die Leuchtdiode ist so angebracht, daß sie mit ihrer Leuchtwirkung das Gehäuse und den stabförmigen Zeiger beleuchtet. Weil der stabförmige Zeiger im Abstand von wenigen Millimetern parallel zur Angelrutenspitze verläuft, ist auch die Angelrutenspitze auf einer Länge von 10 bis 20 cm beleuchtet. Die Bißanzeige kann durch Austausch verschieden schwerer Kugeln auf verschieden starkes Beißverhalten eingestellt werden. Auch läßt sich die Empfindlichkeit der Piezoscheibe über die Elektronik leicht einstellen.

Damit ein zuverlässiger Halt des Bißanzeigers im Bereich der Angelrutenspitze an der Angelrute gewährleistet ist, sind am Gehäuse koaxial zur Leuchtdiode einander gegenüberliegend zylindrische Stutzen am Gehäuse angeformt, deren Durchmesser so bemessen sind, daß die Stutzen von oberen und unteren Klammern eines Knicklichthalters für Angelruten zuverlässig erfaßbar sind.

Vorteilhafterweise weist der obere zylindrische Stutzen eine Ausnehmung auf, in die das untere Ende eines stabförmigen Zeigers aus transparentem Kunststoff einsteckbar ist. Dieser Bißanzeiger kann sowohl mit als auch ohne Zeiger benutzt werden. Der Bißanzeiger ist so ausgelegt, daß die Leuchtdiode das aus transparentem Kunststoff bestehende Gehäuse erleuchtet. Wegen der koaxialen Anordnung der Leuchtdiode zum hülsenförmigen Stutzen leuchtet die Leuchtdiode auch in den aus transparentem Kunststoff bestehenden stabförmigen Zeiger hinein, so daß das obere freie Ende einer Angelrute beleuchtet ist. Die Elektronik im Gehäuse ist so ausgelegt, daß bei plötzlichen Bewegungen der Angelrutenspitze eine im Gehäuse frei bewegliche Masse auf eine Piezoscheibe einwirkt und dabei für einige Sekunden die Leuchtdiode einschaltet oder auf pulsierendes Leuchten umschaltet.

Das Gehäuse und/oder der Zeiger können aus einem lichtleitenden Kunststoff bestehen. Dabei ist es zweckmäßig, am Zeiger oder am Gehäuse Lichtaustrittskanten vorzusehen.

Bei richtig angebrachtem Bißanzeiger erstreckt sich der Zeiger im geringen Abstand parallel zur Angelrutenspitze. Der Abstand des Zeigers von der Angelrute beträgt etwa 2 - 3 mm.

Vorteilhafterweise ist das freie Ende des Zeigers mit einer an einer Angelrutenspitze anbringbaren federnden Klammer versehen. Durch diese Klammer wird einerseits der Bißanzeiger noch zuverlässiger an der Angelrute gehalten. Ferner kann sich bei dieser Ausführung auch keine Angelrutenschnur zwischen Zeiger und Angelrute verfangen.

Bei einer weiteren Ausführungsform der Erfindung sind die Klammern zum Befestigen des Bißanzeigers an einer Angelrute unmittelbar am Gehäuse angeformt.

In der folgenden Beschreibung werden Ausführungsbeispiele der Erfindung näher erläutert. Die Zeichnungen zeigen in
- Fig. 1: eine Schnittansicht und
- Fig. 2: eine Frontansicht auf den erfindungsgemäßen Bißanzeiger (im vergrößerten Maßstab),
- Fig. 3: eine Frontansicht,
- Fig. 4: eine Seitenansicht und
- Fig. 5: eine Draufsicht auf den erfindungsgemäßen Bißanzeiger,
- Fig. 6 und 7: Ansichten eines bekannten Knicklichthalters und
- Fig. 8: eine Seitenansicht einer abgewandelten Ausführungsform des Bißanzeigers,
- Fig. 9: eine Draufsicht auf den Bißanzeiger nach Fig. 8.

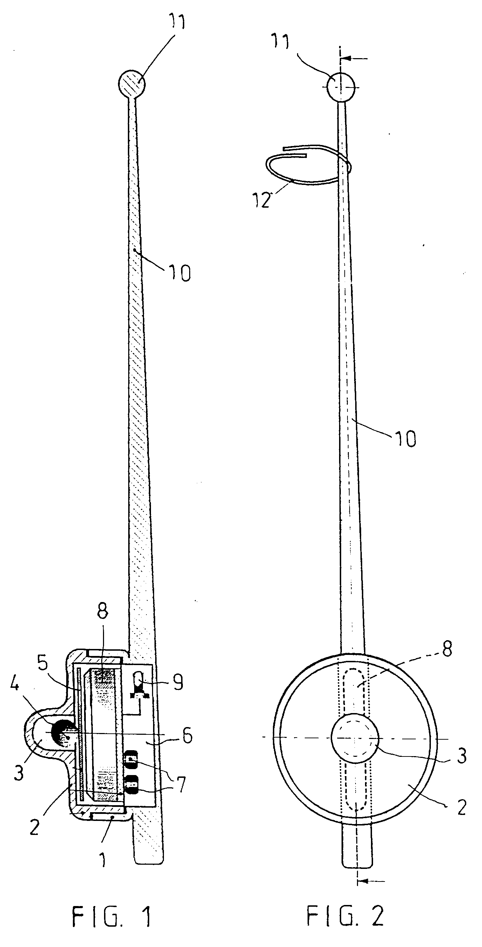

Die Bißanzeige nach Fig. 1 und Fig. 2 hat ein kreisrundes Gehäuse 1, das von einem Gehäusedeckel 2 verschlossen ist. Das Gehäuse 1 mit Gehäusedeckel 2 besteht aus transparentem Kunststoff. Am Gehäusedeckel 2 befindet sich eine Ausbuchtung zur Schaffung eines Hohlraumes 3, in dem eine kugelförmige Masse 4 angeordnet ist, die ein Lichtsignal oder Lichtsignale auslöst, wenn sie auf eine hochempfindliche Schaltscheibe 5, insbesondere eine Piezoscheibe, aufschlägt.

Durch Auswechslung verschieden schwerer Kugeln 4 kann auf verschieden starke Beißverhalten und auf Eliminierung von Störfaktoren wie Windstoß oder Wasserströmung eingestellt werden. Im Gehäuse 1 befindet sich eine Platine, auf der eine Knopfzelle 8 für die Stromversorgung der SMD-Sensorelektronik 7 und Leuchtdiode 9 aufgelötet ist. Über einen spritzwassergeschützten Schalter 32 kann die Leuchtdiode 5 von Hand eingeschaltet werden. Unter der elastischen Wand des Gehäusedeckels 2 befindet sich ein Druckschalter. Durch Öffnen des zweiteiligen Gehäuses 1,2 ist problemlos das Wechseln der Batterie 8 und Austauschen der Kugel 4 möglich. Am Gehäuse 1 ist ein stabförmiger Zeiger 10 aus transparentem Kunststoff mit einer kugelförmigen oder ovalen Spitze 11 angeordnet. Diese Spitze 11 leuchtet heller, wenn die Leuchtdiode 9 Licht abstrahlt.

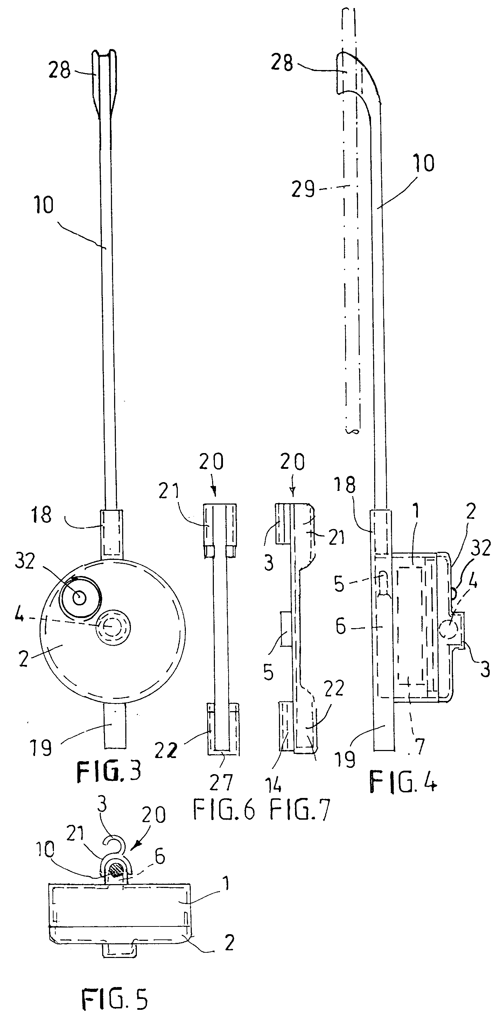

Auch bei dem Gerät nach den Fig. 3 bis 9 ist in dem Gehäuse 1 mit Gehäusedeckel 2 die elektronische Leuchteinrichtung untergebracht, die sich zusammensetzt aus einer Batterie 7, einem von einer frei beweglichen kugelförmigen Masse 4 betätigten Schalter und mindestens einer Leuchtdiode 5, die sich auf der der Angelrute 29 zugewandten Seite des Gehäuses 1 befindet. Am Gehäuse 1 sind koaxial zur Leuchtdiode 5 einander gegenüberliegend zylindrische Stutzen 18 und 19 angeformt. Deren Durchmesser sind so bemessen, daß sie von oberen und unteren Klammern 21 und 22 eines Knicklichthalters 20 für Angelruten zuverlässig gehalten werden. Der obere Stutzen 18 weist eine Ausnehmung auf, in die das untere Ende eines stabförmigen Zeigers 10 einsteckbar ist. Dieser Stutzen 18 ist im wesentlichen hülsenförmig ausgebildet. Die Leuchtdiode 5 richtet ihr Licht in den Zeiger 10, so daß dieser über seine gesamte Länge hell erleuchtet. Zur Herbeiführung eines besonders hellen Lichtes kann der Zeiger 10 aber auch das Gehäuse 1 aus einem lichtleitenden Kunststoff bestehen. Da dieser lichtleitende Kunststoff bei Bestrahlung insbesondere sehr hell an Kanten leuchtet, kann das Gehäuse und auch der Zeiger mit Lichtaustrittskanten versehen sein.

Am oberen freien Ende des Leuchtzeigers 10 ist eine Klammer 28 angeformt, die federnd die Angelrutenspitze 29 umklammert. Diese Klammer 28 ist so geformt, daß eine Stufe gegenüber der Angelrute 29 vermieden ist. Auf diese Weise wird verhindert, daß sich Angelschnur zwischen Zeiger 10 und Angelrute 29 verfängt. Diese mit einer federnden Klammer 28 versehene Zeigerspitze kann ebenso wie die kugelförmige Spitze 11 auf den stabförmigen Zeiger 10 aufgesetzt werden.

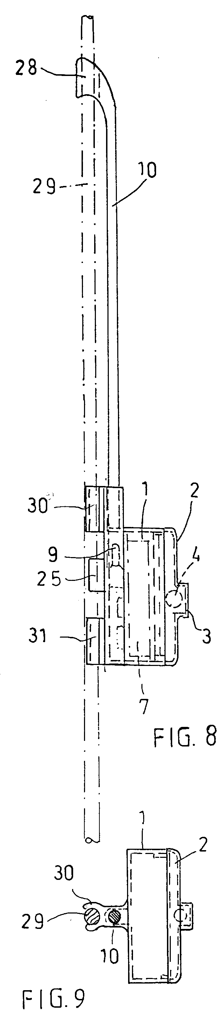

Bei der Ausführungsform nach Fig. 8 sind unmittelbar am Gehäuse 1 federnde Klammern 30 und 31 angeformt, mit denen das Gehäuse an die Angelrute 29 angeklemmt werden kann.

### Bezugszeichenliste:

- 1: Gehäuse
- 2: Gehäusedeckel
- 3: Ausbuchtung
- 4: Schaltmasse, Kugel
- 5: Schaltscheibe, Piezoscheibe
- 6: Kanal
- 7: Elektronik
- 8: Batterie
- 9: Lichtquelle, Leuchtdiode
- 10: Zeiger
- 11: Kugelspitze
- 12: Ring
- 18: Zylinderansatz
- 19: Zylinderansatz
- 20: Anschlußteil, Knicklichthalter
- 21: obere Klammer
- 22: untere Klammer
- 23: ober Klammer für Angelrute
- 24: untere Klammer für Angelrute
- 25: Anschlag
- 27: Boden
- 28: Klammer
- 29: Angelrutenspitze
- 30: obere Klammer am Gehäuse
- 31: untere Klammer am Gehäuse
- 32: Schalter

## Patentansprüche

1. Bißanzeiger für Angelruten, mit einem Gehäuse aus transparentem Kunststoff, einer im Gehäuse (1) untergebrachten elektronischen Leuchteinrichtung, die sich zusammensetzt aus mindestens einer Batterie (7), mindestens einer Leuchtdiode (5) und einem von einer beweglichen Masse (4) betätigten Schalter, wobei die bewegliche Masse (4) in einem Hohlraum (3) des Gehäuses (1) gehalten ist, **dadurch gekennzeichnet**, daß der Hohlraum (3) im Querschnitt größer ist als der größte Querschnitt der vorzugsweise kugelförmigen Masse (4) und zum Inneren des Gehäuses von einer hochempfindlichen Schaltscheibe (5) bzw. Piezoscheibe abgeschlossen ist, die bei Aufprall der Masse (4) über die Elektronik (7) ein Lichtsignal auslöst.

2. Bißanzeiger nach Anspruch 1, **dadurch gekennzeichnet,** daß am Gehäuse (1) in der Flucht der Leuchtdiode (5) ein aus transparentem, insbesondere lichtleitendem Kunststoff bestehender stabförmiger Zeiger (10) angeordnet ist.

3. Bißanzeiger nach Anspruch 1 oder 2, **dadurch gekennzeichnet**, daß im Boden des Gehäuses (1) ein länglicher Kanal (6) zur Aufnahme der Leuchtdiode (9) angeordnet und koaxial zu diesem Kanal (6) der Zeiger (10) angeordnet ist.

4. Bißanzeiger nach einem der Ansprüche 1 bis 3, **dadurch gekennzeichnet**, daß am Gehäuse (1,2) ein von Hand zu betätigender Schalter (32) zum Einschalten einer Beleuchtung angeordnet ist.

5. Bißanzeiger für Angelruten, mit einem Gehäuse (1) aus transparentem Kunststoff, einer im Gehäuse (1) untergebrachten elektronischen Leuchteinrichtung, die sich zusammensetzt aus einer Batterie (7), mindestens einer Leuchtdiode (5) und einem von einer beweglichen Masse (4) betätigten Schalter, insbesondere nach einem der Ansprüche 1 bis 4, **dadurch gekennzeichnet**, daß am Gehäuse (1) koaxial zur Leuchtdiode (5) einander gegenüberliegend zylindrische Stutzen (18,19) angeformt sind, deren Durchmesser so bemessen sind, daß die Stutzen (18,19) von oberen und unteren Klammern (21,22) eines Knicklichthalters (20) für Angelruten erfaßbar sind.

6. Bißarzeiger nach Anspruch 5, **dadurch gekennzeichnet**, daß der obere zylindrische Stutzen (18) eine Ausnehmung aufweist, in die das untere Ende eines stabförmigen Zeigers (10) aus transparentem Kunststoff einsteckbar ist.

7. Bißanzeiger nach einem der Ansprüche 2 bis 6, **dadurch gekennzeichnet**, daß der Zeiger (10) eine kugelförmige oder ovale Spitze (11) aufweist.

8. Bißanzeiger nach einem der Ansprüche 2 bis 6, **dadurch gekennzeichnet**, daß das freie Ende des Zeigers (10) mit einer an der Angelrutenspitze (29) anbringbaren federnden Klammer (28) versehen ist.

9. Bißanzeiger nach Anspruch 7 oder 8, **dadurch gekennzeichnet**, daß die kugelförmige oder ovale Spitze (11) oder die mit einer federnden Klammer (28) versehene Spitze auf den stabförmigen Zeiger (10) aufsteckbar ist.

10. Bißanzeiger für Angelruten, mit einem Gehäuse (1) aus transparentem Kunststoff, einer im Gehäuse (1) untergebrachten elektronischen Leuchteinrichtung, die sich zusammensetzt aus einer Batterie (7), mindestens einer Leuchtdiode (5) und einem von einer beweglichen Masse (4) betätigten Schalter, **dadurch gekennzeichnet**, daß am Gehäuse (1) koaxial zur und in Leuchtrichtung der Leuchtdiode (5) ein hülsenförmiger Ansatz (18) angeformt ist, in dem das Ende des stabförmigen Zeigers (10) einsteckbar ist und an diesem Ansatz (18) sowie an der diametral gegenüberliegenden Seite des Gehäuses (1) je eine federnde Klammer (30,31) angeformt sind zum Anklemmen an einer Angelrute (29) (Fig. 8 und 9).

11. Bißanzeiger nach einem der Ansprüche 1 bis 10, **dadurch gekennzeichnet**, daß am Gehäuse (1,2) eine die Empfindlichkeit der Piezoscheibe (5) elektronisch verändernde Einstellvorrichtung, z.B. Drücker oder Schieber, angeordnet ist.
